# EUROPEAN PATENT SPECIFICATION

(11) **EP 2 940 970 B1**
(45) Date of publication and mention of the grant of the patent: **13.02.2019**
(21) Application number: 13868265.3
(22) Date of filing: 25.09.2013
(51) Int. Cl.: H04L 29/12, H04L 12/937, H04L 12/741, H04L 12/64, H04L 12/26

(54) **NAT IMPLEMENTATION SYSTEM, METHOD, AND OPENFLOW SWITCH**
NAT-IMPLEMENTIERUNGSSYSTEM, VERFAHREN UND OPENFLOW-PAKETVERMITTLER
SYSTÈME ET PROCÉDÉ POUR LA MISE EN OEUVRE D'UNE NAT, ET COMMUTATEUR OPENFLOW

(30) Priority: 26.12.2012 CN 201210574680
(43) Date of publication of application: 04.11.2015
(73) Proprietor: ZTE Corporation, Shenzhen, Guangdong 518057 (CN)
(72) Inventor: MA, Suan, Shenzhen Guangdong 518057 (CN); WANG, Jun, Shenzhen Guangdong 518057 (CN)
(74) Representative: Regimbeau
(86) International application number: PCT/CN2013/084236
(87) International publication number: WO 2014/101501

(56) References cited:
- CN-A- 102 685 006
- CN-A- 102 739 542
- CN-A- 102 904 813
- CN-A- 103 067 534
- US-B2- 7 843 827
- OPEN NETWORKING FOUNDATION: "OpenFlow Switch Specification Version 1.3.1", INTERNET CITATION, 6 September 2012 (2012-09-06), pages 1-128, XP002694270, Retrieved from the Internet: URL:https://www.opennetworking.org/images/ stories/downloads/specification/openflow-s pec-v1.3.1.pdf [retrieved on 2013-03-20]
- SRISURESH M HOLDREGE LUCENT TECHNOLOGIES P: "IP Network Address Translator (NAT) Terminology and Considerations; rfc2663.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 August 1999 (1999-08-01), XP015008446, ISSN: 0000-0003
- JIANYING LUO ET AL: "Prototyping Fast, Simple, Secure Switches for Etha", HIGH-PERFORMANCE INTERCONNECTS, 2007. HOTI 2007. 15TH ANNUAL IEEE SYMPOSIUM ON, IEEE, PISCATAWAY, NJ, USA, 1 August 2007 (2007-08-01), pages 73-82, XP031131041, ISBN: 978-0-7695-2979-0

## Description

### TECHNICAL FIELD

The disclosure relates to the field of network technologies, and in particular to a Network Address Translation (NAT) implementation system and method, and an Openflow switch.

### BACKGROUND

A NAT technology is a technology for translating a private address into a public Internet Protocol (IP) address, and such a technology is widely applied to an Internet access manner. An internal network of an enterprise is a private network, and may adopt a private address as a host address. When a host is connected to a server on the Internet, a NAT equipment translates a private address of a data packet into a public IP address, and sends the data packet to the server. When the server on the Internet returns a response data packet according to the public IP address, the NAT equipment translates the public IP address into the original private address, so that the response data packet can be correctly returned to the corresponding host. By the NAT technology, the same public IP address may correspond to private addresses of multiple hosts, so that public IP address resources are saved on the premise of ensuring the security of the internal network of the enterprise.

A Software Defined Network (SDN) technology is a communication network implementation method. The NAT technology is applied to an Openflow (network switch model)-based SDN to separate data packet routing control from data packet forwarding. The "OpenFlow Switch Specification" from Open Network Foundation, Version 1.3.1 of September 6, 2012 describes the requirements of an Open Flow Switch. JIANYING LUO ET AL: "Prototyping Fast, Simple, Secure Switches for Etha",HIGH-PERFORMANCE INTERCONNECTS, 2007. HOTI 2007. 15TH ANNUAL IEEE SYMPOSIUM ON, IEEE, PISCATAWAY, NJ, USA, 1 August 2007, pages 73-82 discloses OpenFlow switches performing NAT.

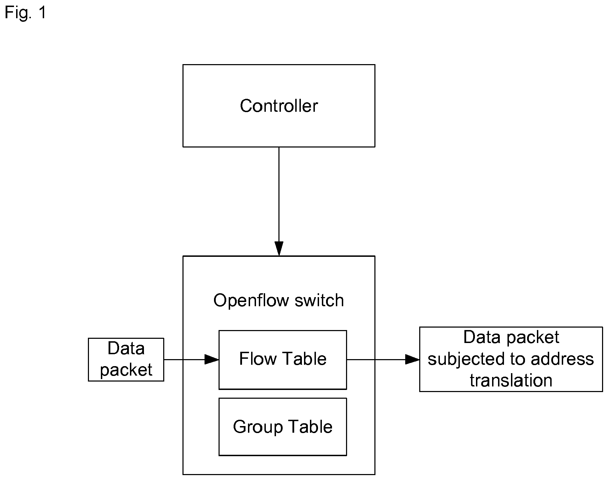

As shown in Fig. 1, an existing Openflow network structurally includes a Controller and an Openflow switch.

When a host B' of an internal network of an enterprise is linked to a server D of the Internet, the Openflow switch receives a data packet A with a private address B from the host B', and the Openflow switch reports a data packet A reception event to the Controller.

After receiving the reported event, the Controller transmits one or more Flow Tables to the Openflow switch. The flow tables include action sets indicating to translate the private address B of the data packet A into a public IP address C to establish an address mapping relationship between the private address B of the data packet A and the public IP address C. The Openflow switch translates the private address B into the public IP address C according to content recorded in the flow tables, and sends the data packet A via the public IP address C.

The Controller transmits a Group Table to the Openflow switch at the same time of transmitting the flow tables to the Openflow switch. The group table includes data types and corresponding operations with respect to respective data types. For example, a data packet with its data type being Select is subjected to broadcasting, server load balancing and the like.

From the above, the Openflow switch implements translation from the private address B to the public IP address C through the flow tables. In addition, when the host B' is linked to another server such as a server E of the Internet, the Openflow switch performs interaction once again with the Controller according to the abovementioned technical solution. That is, in an existing technology, every time when the host B' establishes a different link (the host B' is linked to a different server of the Internet), the Controller needs to transmit the flow tables once again to the Openflow switch when the Openflow switch receives a data packet with a private address from the host B'. When there are a great number of host data packets of private networks to be sent to the Internet through the Openflow switch, the Controller frequently transmits the flow tables, which may increase the times of interaction between the Openflow switch and the Controller and prolong a data packet forwarding time delay. Moreover, other services, besides the data packets transmission between the host and the servers, are transmitted through the Internet, which further incurs serious influence on the network transmission efficiency of the Internet.

### SUMMARY

In view of this, the embodiments of the disclosure provide a NAT implementation system and method, and an Openflow switch, which can reduce the times of interaction between the Openflow switch and a Controller, shorten a data packet forwarding time delay and improve network transmission efficiency.

The invention is carried out according to the appended independent claims. Optional features of the invention are carried out according to the dependent claims.

The technical solutions of the embodiments of the disclosure are implemented as follows.

An embodiment of the disclosure provides a NAT implementation system including a Controller and an Openflow switch.

The Controller is configured to transmit a set of pre-set flow tables and a pre-set improved group table to the Openflow switch via an Openflow protocol once.

The Openflow switch is configured to receive the set of pre-set flow tables and the pre-set improved group table transmitted by the Controller via the Openflow protocol; and
receive a data packet from a private network or the Internet, match the data packet in need of address translation according to an address translation matching rule recorded in the set of pre-set flow tables, execute translation between a private address and a public IP address of the data packet according to an address translation rule recorded in the improved group table, and send the data packet to the Internet or the private network.

In the solution, the Openflow switch may include a Switch control plane, an internal channel and a Switch forwarding plane.

The Switch control plane may be configured to receive the set of pre-set flow tables and the pre-set improved group table transmitted by the Controller via the Openflow protocol; and
determine whether the attributes of received data packet can be matched with the address translation matching rule recorded in the set of pre-set flow tables after receiving the set of pre-set flow tables and the pre-set improved group table, when data packet attributes can be matched with the address translation matching rule recorded in the set of pre-set flow tables, the set of flow tables executing a Group command and directing to the improved group table, generate a translation command according to the address translation rule recorded in the pre-set improved group table, and transmit the translation command to the Switch forwarding plane through the internal channel.

The Switch forwarding plane may be configured to receive the data packet from the private network or the Internet, send the data packet attributes to the Switch control plane through the internal channel; and
receive the translation command from the Switch control plane, execute translation between the private address and the public IP address of the data packet according to the address translation rule, and send the data packet after the address translation to the private network or the Internet.

In the solution, the address translation rule recorded in the pre-set improved group table may include the following contents: a protocol type of the data packet in need of address translation, a public IP address range from which a public IP address may be selected to correspond to a private address, a port number range and valid maintenance time of a translation correspondence between a private address and a public IP address.

In the solution, the set of pre-set flow tables may record rules and commands which are executed on the data packet which can be matched with the rules. The rules may include the address translation matching rule. The commands may include the Group command. When a certain data packet can be matched with the address translation matching rule recorded in the set of pre-set flow tables, the set of pre-set flow tables executes the Group command and directs to the improved group table containing a NAT data type.

In the solution, the Switch control plane may receive the set of pre-set flow tables and the pre-set improved group table, and may further include a NAT analysis module, wherein
the set of flow tables may be configured to execute the Group command and direct to the pre-set improved group table containing the NAT data type when the data packet attributes can be matched with the recorded address translation matching rule;
the improved group table may be configured to record the address translation rule; and
the NAT analysis module may be configured to analyse the data packet attributes according to an Internet Assigned Numbers Authority (IANA) regulation and the address translation rule, generate the translation command, and transmit the translation command to the Switch forwarding plane through the internal channel.

In the solution, the Switch forwarding plane may be further configured to store a NAT list of the data packet after finishing translation from the private address to the public IP address.

Another embodiment of the disclosure further provides a NAT implementation method.

An Openflow switch receives a set of pre-set flow tables and a pre-set improved group table transmitted by a Controller via an Openflow protocol once.

The Openflow switch determines a data packet in need of address translation according to the set of received flow tables and improved group table and an address translation matching rule recorded in the set of pre-set flow tables, executes translation between a private address and a public IP address of the data packet according to an address translation rule recorded in the pre-set improved group table, and sends the data packet to the Internet or a private network.

In the solution, the improved group table may record the address translation rule, and contents recorded in the address translation rule may include:
a protocol type of the data packet in need of address translation, a public IP address range from which a public IP address may be selected to correspond to a private address, a port number range and valid maintenance time of a translation correspondence between a private address and a public IP address.

In the solution, translation between the private address and the public IP address of the data packet may include:
determining whether a source address and a destination address of a current data packet are private addresses or public IP addresses according to an IANA regulation and the address translation rule;
when the source address of the current data packet is determined to be a private address and the destination address is determined to be a public IP address, translating the private address into the public IP address, sending the current data packet to the destination address via the translated public IP address, and storing an item of the current data packet in a NAT list;
when the source address of the current data packet is determined to be a public IP address and the destination address is within the range recorded in the address translation rule, looking up all the stored items in the NAT list;
when a NAT list item about a translation relationship of the public IP address is found, translating the destination IP address and port number of the current data packet into the private address and port number, and sending the current data packet to a host linked to the private address; and
when no NAT list item about the translation relationship of the public IP address is found, discarding the current data packet.

Another embodiment of the disclosure provides an Openflow switch including a Switch control plane, an internal channel and a Switch forwarding plane, wherein
the Switch control plane is configured to receive a set of pre-set flow tables and a pre-set improved group table transmitted by a Controller via an Openflow protocol once;
determine whether the attributes of received data packet can be matched with the address translation matching rule recorded in the set of pre-set flow tables after receiving the set of pre-set flow tables and the pre-set improved group table, when data packet attributes can be matched with the address translation matching rule recorded in the set of pre-set flow tables, the set of pre-set flow tables executing a Group command and directing to the improved group table, and
generate a translation command according to an address translation rule recorded in the pre-set improved group table, and transmit the translation command to the Switch forwarding plane through the internal channel; and
the Switch forwarding plane is configured to receive a data packet from a private network or the Internet, and send the data packet attributes to the Switch control plane through the internal channel; and
receive the translation command from the Switch control plane, execute translation between a private address and a public IP address of the data packet according to the address translation rule, and send the data packet after the address translation to the private network or the Internet.

In the solution, the Switch control plane may receive the set of pre-set flow tables and the pre-set improved group table, and further includes a NAT analysis module, wherein
the set of flow tables is configured to execute the Group command and direct to the pre-set improved group table containing a NAT data type when data packet attributes can be matched with the recorded address translation matching rule;
the pre-set improved group table is configured to record the address translation rule; and
the NAT analysis module is configured to analyse the data packet attributes according to an IANA regulation and the address translation rule, generate the translation command, and transmit the translation command to the Switch forwarding plane through the internal channel.

In the solution, the address translation rule recorded in the pre-set improved group table includes the following contents: a protocol type of the data packet in need of address translation, a public IP address range from which a public IP address may be selected to correspond to a private address, a port number range and valid maintenance time of a translation correspondence between a private address and a public IP address.

According to the NAT implementation system and method and the Openflow switch provided by the embodiments of the disclosure, the Controller transmits the set of flow tables and the improved group table to the Openflow switch via the Openflow protocol. The Openflow switch receives the set of flow tables and the improved group table, and performs rule matching on the received data packet. It is indicated that the current data packet is in need of address translation when the data packet can be matched with the recorded address translation matching rule, and thus the set of flow tables executes the Group command and directs to the improved group table. Since the address translation rule is recorded in the improved group table, the Openflow switch executes translation between the private address and the public IP address via the translation command of the NAT analysis module according to the address translation rule recorded in the improved group table. By the embodiments of the disclosure, the Controller is not required to frequently transmit the set of flow tables and the improved group table, and instead is required to transmit the set of flow tables and the improved group table only when the data packet received by the Openflow switch is the first data packet of the private network, so that the times of interaction between the Openflow switch and the Controller are reduced, the data packet forwarding time delay is shortened, and the network transmission efficiency is improved.

### BRIEF DESCRIPTION OF THE DRAWINGS

Fig. 1 is a schematically structural diagram of an Openflow network according to the existing technology;
Fig. 2 is a schematically structural diagram of a NAT implementation system according to an embodiment of the disclosure;
Fig. 3 is a schematic diagram of table entries of an improved group table according to an embodiment of the disclosure;
Fig. 4 is a schematic diagram of a storage format of a NAT list according to an embodiment of the disclosure; and
Fig. 5 is a flowchart of a NAT implementation method according to an embodiment of the disclosure.

### DETAILED DESCRIPTION

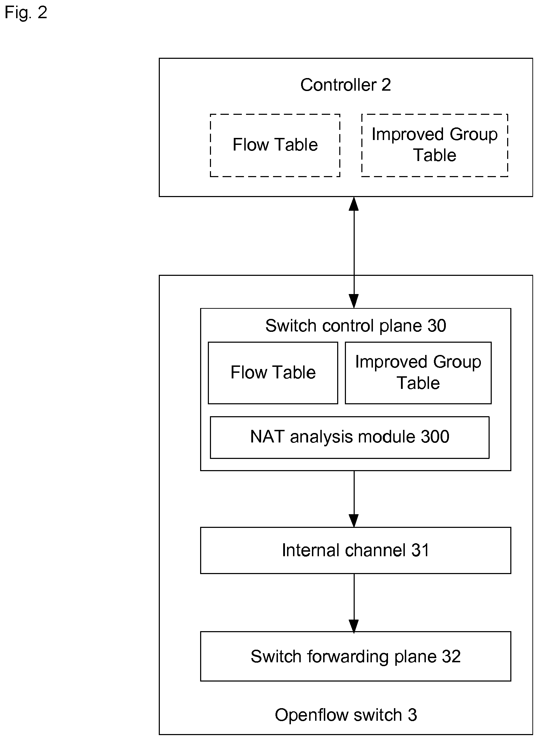

The embodiment of the disclosure provides a NAT implementation system. As shown in Fig. 2, the system includes a Controller 2 and an Openflow switch 3.

The Controller 2 is configured to transmit a set of flow tables and an improved group table to the Openflow switch 3 via an Openflow protocol.

The Openflow switch 3 is configured to receive the set of flow tables and the improved group table transmitted by the Controller 2 via the Openflow protocol, and receive a data packet from a private network or the Internet.

The Openflow switch 3 is further configured to match a data packet in need of address translation according to an address translation matching rule recorded in the set of flow tables, execute translation between a private address and a public IP address of the data packet according to an address translation rule recorded in the improved group table, and send the data packet to the Internet or the private network.

The set of flow tables and the improved group table are pre-set according to a data packet forwarding routing. The Controller 2 may transmit the set of flow tables and the improved group table to the Openflow switch 3 when the system is started, and may also transmit the set of flow tables and the improved group table to the Openflow switch 3 when the host of the private network is required to be linked to the Internet, i.e., according to a service need of a host of the private network.

The set of flow tables records rules and commands, and the rules include the address translation matching rule, a port number translation matching rule and the like. Correspondingly, the commands include a Group command, a port number translation command and the like. The Group command is executed on a data packet which can be matched with the address translation matching rule. The port number translation command is executed on a data packet which can be matched with the port number translation matching rule.

The address translation matching rule records attributes of a data packet in need of address translation. That is, contents recorded in the address translation matching rule include a protocol type of the data packet in need of address translation, a source address and port number as well as a destination address and port number.

For example, the contents recorded in the address translation matching rules include that a data packet in need of address translation is from the private network, has a source address (private address) of 192.168.0.1, a source port number of 1, a destination address (public IP address) of 200.168.10.1 and a destination port number of 2, and its protocol type is Transmission Control Protocol (TCP).

It is implemented as follows that the Openflow switch 3 matches the data packet in need of address translation according to the address translation matching rule recorded in the set of flow tables. The Openflow switch 3 performs matching of the attributes of the received data packet with the address translation matching rule.

The data packet attributes include the protocol type, addresses and port numbers of the data packet. The protocol type of the data packet includes TCP or User Datagram Protocol (UDP). The addresses include a source address and a destination source. Herein, when the system sends a data packet to a server linked to the Internet, the source address refers to a pre-translated private address, and the destination address refers to an address of the server linked to the Internet. When the system receives a data packet from the server linked to the Internet, the source address refers to an address of the server linked to the Internet, and the destination address refers to a public IP address used when the system receives the data packet from the server linked to the Internet.

Matching includes determining whether information, such as the protocol type, the port numbers and the addresses, of a current data packet is consistent with the contents recorded in the address translation matching rule or not, confirming that the current data packet is a data packet in need of address translation when the information is consistent with the contents recorded in the address translation matching rule, and confirming that the current data packet is a data packet in no need of address translation when the information is inconsistent with the contents recorded in the address translation matching rule.

When the Openflow switch 3 determines that the current data packet is a data packet in need of address translation according to the address translation matching rule recorded in the set of flow tables, the set of flow tables executes the Group command. The Group command is executed by directing to the improved group table with a table entry of NAT data type and performing translation between the private address and the public IP address of the data packet according to the address translation rule recorded in the improved group table.

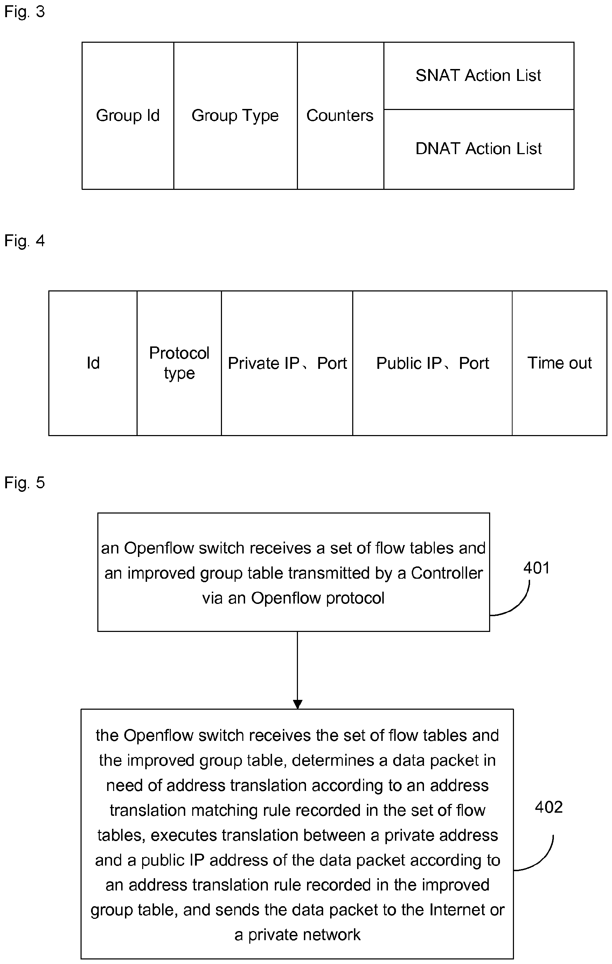

A table entry format of the improved group table is shown in Fig. 3, and the improved group table is called an improved group table because an improvement is made on the basis of an existing group table. According to the improved group table in the embodiment of the disclosure, the NAT data type is added to the table entry of Group Type on the basis of not changing a table entry structure of the existing group table.

With reference to Fig. 3, each table entry of the improved group table is described as follows.

The table entry of Group Identifier (ID) represents an ID of a data packet in need of address translation.

The table entry of Group Type includes, besides data types such as Select in the existing technology, the NAT data type. When the table entry of Group Type is the NAT data type, it represents that the data packet with the table entry of Group ID is needed to be subjected to address translation according to contents recorded in the address translation rule.

Herein, the contents recorded in the address translation rule include the protocol type (TCP or UDP) of the data packet in need of address translation, a public IP address range for private address to select (or translate), a port number range and valid maintenance time of a translation correspondence between a private address and a public IP address.

When there is still no data packet subjected to address translation after the valid maintenance time, the translation correspondence between the private address and the public IP address is deleted.

The table entry of Counters represents counting over the data packet in need of address translation.

The table entries of the improved group table further include two Action Lists. One is a Source Network Address Translation (SNAT) Action List including action to be executed after the private address is translated into the public IP address. That is, the action in the SNAT Action List is executed after a data packet from the private network is translated from a private address into a public IP address. Herein, the action in the SNAT Action List may be set according to service needs. For example, the action in the SNAT Action List may be set to output the current data packet to a physical port linked to the Internet.

The other is a Destination Network Address Translation (DNAT) Action List including action to be executed after the public IP address is translated into the private address. That is, the action in the DNAT Action List is executed after a data packet from the Internet network is translated from a public IP address into a private address. Herein, the action in the DNAT Action List may be set according to service needs. For example, the action in the DNAT Action List may be set to output the current data packet to a physical port linked to the private network.

Preferably, the Openflow switch 3 includes a Switch control plane 30, an internal channel 31 and a Switch forwarding plane 32.

The Switch control plane 30 is configured to receive the set of flow tables and the improved group table transmitted by the Controller 2 via the Openflow protocol, and receive the data packet attributes sent by the Switch forwarding plane 32; and

after receiving the set of flow tables and the improved group table, determine that the data packet is in need of address translation when data packet attributes can be matched with the address translation matching rule recorded in the set of flow tables, the set of flow tables executing the Group command and directing to the improved group table, generate a translation command according to the address translation rule recorded in the improved group table, and transmit the translation command to the Switch forwarding plane 32 through the internal channel 31.

The Switch forwarding plane 32 is configured to receive the data packet from the private network or the Internet, and send the data packet attributes to the Switch control plane 30 through the internal channel 31; and
receive the translation command from the Switch control plane 30, execute translation between the private address and the public IP address of the data packet according to the address translation rule, and send the data packet to the private network or the Internet.

The Switch control plane 30 includes the set of flow tables and the improved group table transmitted by the Controller 2, and further includes a NAT analysis module 300.

In the Switch control plane 30, the set of flow tables is configured to execute the Group command and direct to the improved group table with the table entry of NAT data type when the data packet attributes can be matched with the recorded address translation matching rule.

The improved group table is configured to record the address translation rule.

The NAT analysis module 300 is configured to analyse the data packet attributes according to an IANA regulation and the address translation rule, generate the translation command, and transmit the translation command to the Switch forwarding plane 32 through the internal channel 31.

Matching includes determining whether the information, such as the protocol type, the port numbers and the addresses, of the current data packet is consistent with the contents recorded in the address translation matching rule or not and confirming that the current data packet is a data packet in need of address translation when the information is consistent with the contents recorded in the address translation matching rule.

Specifically, the specific process that the system finishes translation from the private address (source address) to the public IP address and sends data to the destination address of the server linked to the Internet via the translated public IP address is as follows.

The Controller 12 transmits the set of flow tables and the improved group table to the Openflow switch 3, specifically to the Switch control plane 30, via the Openflow protocol.

The Openflow switch 3 receives the set of flow tables and the improved group table via the Openflow protocol. Specifically, the Switch control plane 30 receives the set of flow tables and the improved group table.

The Switch forwarding plane 32 receives the current data packet from the private network, and sends the attributes of the current data packet to the Switch control plane 30 through the internal channel 31.

The Switch control plane 31 receives the attributes of the current data packet, and performs rule matching on the attributes of the current data packet. Herein, matching includes determining whether information, such as the protocol type, the port numbers and the addresses, of the current data packet is consistent with the contents recorded in the address translation matching rule or not, confirming that the current data packet is a data packet in need of address translation when the information is consistent with the contents recorded in the address translation matching rule. The set of flow tables executes the Group command, and the set of flow tables directs to the improved group table with the table entry of NAT data type. The NAT analysis module 300 analyses the source address and destination address of the current data packet according to the IANA regulation.

The NAT analysis module 300 determines that the source address of the current data packet is a private address and the destination address is a public IP address according to the IANA regulation. The NAT analysis module 300 generates a translation command of translating the private address into the public IP address, and sends the translation command to the Switch forwarding plane 32 through the internal channel 31.

The IANA regulation is as follows. The IANA keeps the following three IP address blocks for the private network:
10.0.0.0-10.255.255.255
172.16.0.0-172.31.255.255
192.168.0.0-192.168.255.255

The NAT analysis module 300 may determine whether the source address and destination address of the current data packet are private addresses or public IP addresses according to the above IANA regulation.

The Switch forwarding plane 32 executes the translation of the current data packet from the private address to the corresponding public IP address according to the address translation rule recorded in the improved group table after receiving the translation command transmitted by the NAT analysis module 300, and sends the current data packet to the Internet via the public IP address.

The contents of the address translation rule recorded in the improved group table include the public IP address range from which a public IP address may be selected to correspond to a private address (or translate) and the port number range. Herein, the Switch forwarding plane 32 selects, from the translatable public IP address and port number ranges, a public IP address (the corresponding public IP address) and port number in an idle state during the translation of the current data packet for the translation of the private address of the current data packet.

Since the SNAT Action List of the improved group table includes the action to be executed, i.e., outputting the current data packet to the physical port linked to the Internet, after the private address of the current data packet is translated into the corresponding public IP address, the Switch forwarding plane 32 sends the current data packet to the physical port linked to the Internet via the corresponding public IP address.

After the Switch forwarding plane 32 finishes the translation from the private address to the corresponding public IP address, the NAT analysis module 300 establishes and stores an item of the current data packet in a NAT list. A storage format of the NAT list item is shown in Fig. 4, wherein
the table entry of ID is configured to represent the ID of the current data packet;
the table entry of Protocol type is configured to represent the protocol type, which is determined by the Openflow protocol and may be UDP or TCP;
the table entry of Private IP, Port is configured to represent the private address and port number of the current data packet;
the table entry of Public IP, Port is configured to represent the public IP address and port number of the current data packet; and
the table entry of Time out is the valid maintenance time of the translation correspondence between the private address and the public IP address, and is configured to represent that the current NAT list item is deleted if there is still no data packet in need of corresponding address translation after the valid maintenance time.

Corresponding to the specific process that the system finishes translation from the private address to the public IP address and sends the data to the destination address via the translated public IP address, the process that the system receives the data packet from the server (source address) linked to the Internet via the public IP address (destination address) and sends the data packet to the host with the private address may specifically be as follows.

The Switch forwarding plane 32 receives the data packet from the Internet, and sends the attributes of the received current data packet to the Switch control plane 30 through the internal channel 31.

Herein, the attributes of the current data packet include the protocol type, source address, destination address and port numbers of the data packet.

The Switch control plane 30 receives the attributes of the current data packet, and performs rule matching on the current data packet. Herein, matching includes determining whether information, such as the protocol type, the port numbers and the addresses, of the current data packet is consistent with the contents recorded in the address translation matching rule or not, and confirming that the current data packet is a data packet in need of address translation when the information is consistent with the contents recorded in the address translation matching rule. The set of flow tables executes the Group command, and directs to the improved group table with the table entry of NAT data type.

The NAT analysis module 300 looks up all the stored items in the NAT list when determining that the source address of the current data packet is a public IP address, the destination address is also a public IP address and the destination address and the port number are within the public IP address range and port number range recorded in the address translation rule according to the IANA regulation and the address translation rule.

When the NAT analysis module 300 can find the NAT list item with a record of the address translation relationship of the public IP address (destination address) of the current data packet, the NAT analysis module 300 generates a translation command of translating the public IP address into the private address, and sends the translation command to the Switch forwarding plane 32 through the internal channel 31.

The Switch forwarding plane 32 executes the translation of the current data packet from the public IP address to the private address so as to translate the destination address and port number of the current data packet into the corresponding private address and private address port number after receiving the translation command transmitted by the NAT analysis module 300, and sends the current data packet to the host with the private address and port number.

Herein, when the NAT analysis module 300 cannot find the NAT list item with a record of the address translation relationship of the public IP address, the NAT analysis module 300 discards the current data packet.

In practice, the Switch control plane 30, the Switch forwarding plane 32 and the NAT analysis module 300 may be implemented by a Central Processing Unit (CPU), or a Digital Signal Processor (DSP), or a Field Programmable Gate Array (FPGA) or the like; and the CPU, the DSP and the FPGA may be positioned in the Openflow switch 3.

Based on the abovementioned NAT implementation system, the embodiment of the disclosure further provides a NAT implementation method, as shown in Fig. 5, the method including:
Step 401: an Openflow switch receives a set of flow tables and an improved group table transmitted by a Controller via an Openflow protocol; and
Step 402: the Openflow switch receives the set of flow tables and the improved group table, matches a data packet in need of address translation according to an address translation matching rule recorded in set of the flow tables, executes translation between a private address and a public IP address of the data packet according to an address translation rule recorded in the improved group table, and sends the data packet to the Internet or a private network.

The set of flow tables and the improved group table are preset according to a data packet forwarding routing.

The set of flow tables records rules, for example, the address translation matching rule and a port number translation matching rule, and commands, such as a Group command and a port number translation command.

The address translation matching rule records attributes of a data packet in need of address translation. Since the attributes of the data packet include a protocol type (TCP or UDP), addresses (source address and destination address) and port numbers of the data packet, contents recorded in the address translation matching rule include the protocol type of the data packet in need of address translation, the source address, the destination address and the port numbers.

The Openflow switch performs matching of the received data packet attributes with the address translation matching rule. Said matching includes determining whether information, such as the protocol type, the port numbers and the addresses, of a current data packet is consistent with the contents recorded in the address translation matching rule or not, confirming that the current data packet is a data packet in need of address translation when the information is consistent with the contents recorded in the address translation matching rule, and confirming that the current data packet is a data packet in no need of address translation when the information is inconsistent with the contents recorded in the address translation matching rule.

In practice, since enterprises usually own private addresses, it is the most common that an enterprise sends a data packet to a server linked to the Internet at first and then receives a response data packet returned by the server. In consideration of the interests of the enterprise, it rarely occurs that the server linked to the Internet sends a data packet to the private network of the enterprise at first and then the private network receives the data packet and returns a response data packet.

Specifically, according to the embodiment of the disclosure, the specific process of implementing translation from the private address (source address) to the public IP address and sending data to the server (destination address) linked to the Internet via the translated public IP address may be as follows.

Step 501: the Controller transmits the set of flow tables and the improved group table to the Openflow switch, specifically to a Switch control plane, via the Openflow protocol.

Herein, a data packet in need of address translation can be matched according to the address translation matching rule recorded in the set of flow tables.

Step 502: the Openflow switch receives the set of flow tables and the improved group table via the Openflow protocol, and specifically, the Switch control plane receives the set of flow tables and the improved group table.

Step 503: the Openflow switch, specifically a Switch forwarding plane, receives the current data packet.

For example, the current data packet is A, the current data packet A is from the private network, and its attributes are as follows: the protocol type is TCP, the source address (private address) is 192.168.0.1, the host port number is 1 and the destination address is 200.168.38.1.

Step 504: the Switch forwarding plane sends the attributes of the current data packet to the Switch control plane through an internal channel.

Step 505: the Switch control plane receives the attributes of the current data packet, and performs rule matching on the attributes of the current data packet.

Specifically, the Switch control plane receives the attributes of the data packet A, and performs rule matching on the attributes of the current data packet A. The attributes of the data packet are as follows: the protocol type is TCP, the source address (private address) is 192.168.0.1, the host port number is 1 and the destination address is 200.168.38.1. When it is recorded in the address translation matching rule that a data packet with the protocol type of TCP, the private address of 192.168.0.1, the host port number of 1 and the destination address of 200.168.38.1 is in need of address translation, the current data packet A is in need of address translation, and the set of flow tables executes a Group command, and directs to the improved table group with a table entry of NAT data type.

Step 506: a NAT analysis module analyses the source address of the current data packet according to an IANA regulation, generates a translation command, and transmits the translation command to the Switch forwarding plane through the internal channel.

Specifically, the NAT analysis module analyses the source address and destination address of the current data packet A to determine that the source address of the current data packet A is a private address and the destination address is a public IP address according to the IANA regulation. For the current data packet, the NAT analysis module generates a translation command of translating the private address into the public IP address, and transmits the translation command to the Switch forwarding plane.

Step 507: the Switch forwarding plane executes translation of the current data packet from the private address (source address) to the public IP address after receiving the translation command transmitted by the NAT analysis module, and sends the current data packet to the server (destination address) linked to the Internet via the public IP address.

The step may be specifically implemented as follows. The Switch forwarding plane translates the private address of 192.168.0.1 (source address) of the current data packet A into the public IP address of 200.168.10.1 after receiving the translation command.

The contents recorded in the address translation rule include the public IP address range for the source address (private address) of 192.168.0.1 of the current data packet A to select and the port number range. For example, for the source address (private address) of 192.168.0.1 to select, the port number range includes port numbers 1-200 and the public IP address range includes 200.168.10.1-200.168.10.100.

The Switch forwarding plane selects 200.168.10.1 and the port number 2 as the public IP address translated from the private address of 192.168.0.1. The public IP address of 200.168.10.1 and the port number 2 are selected because port 2 of the public IP address of 200.168.10.1 is idle during the address translation of the current data packet.

The Switch forwarding plane sends the current data packet A to the server with the destination address of 200.168.38.1 and linked to the Internet via the translated public IP address of 200.168.10.1.

Since there is an action in a SNAT Action List of the improved group table to output the current data packet A to a physical port linked to the Internet after the private address (source address) of 192.168.0.1 is translated into the public IP address of 200.168.10.1, the Switch forwarding plane sends the current data packet A to a physical port with the destination address of 200.168.38.1 via the public IP address of 200.168.10.1.

Step 508: after the Switch forwarding plane finishes the translation from the private address to the corresponding public IP address, the NAT analysis module establishes and stores an item of the current data packet in a NAT list.

Specifically, after the Switch forwarding plane translates the private address (source address) of 192.168.0.1 of the current data packet A into the public IP address of 200.168.10.1, the NAT analysis module establishes and stores the item of the current data packet A in the NAT list. Since the current data packet A is the first data packet from the private network, the table entry of ID of the current data packet A is "1", the table entry of Protocol type is TCP, the table entry of Private IP, Port indicates that the private address is 192.168.0.1 and the port number is 1, and the table entry of Public IP, Port indicates that the public IP address is 200.168.10.1 and the port number is 2.

From the technical solution, the Openflow switch translates the private address (source address) of 192.168.0.1 into the public IP address of 200.168.10.1, and sends the current data packet A to the destination address of 200.168.38.1 via the translated public IP address.

Herein, Step 501 to Step 502 are executed at first because the current data packet A is the first data packet from the private network.

When the current data packet received by the Switch control plane is from the private network, but is not the first data packet from the private network, Step 501 to Step 502 are not required to be executed, and instead Step 503 to Step 508 are directly executed. That is, according to the NAT implementation method in the embodiment of the disclosure, the Openflow switch interacts with the Controller only when the current data packet is the first data packet from the private network. Therefore, the times of interaction can be reduced, the data packet forwarding time delay can be shortened, and the network transmission efficiency can be improved.

Corresponding to the abovementioned solution, when the server (source address) linked to the Internet sends a data packet to the public IP address (destination address), the process of implementing translation from the public IP address (destination address) to the private address and receiving the data packet by the host with the private address according to the embodiment of the disclosure may specifically be as follows.

Step 601: the Openflow switch receives the current data packet, and specifically, the Switch forwarding plane receives the current data packet.

Herein, the Openflow switch receives a data packet B responsive to the data packet A from the Internet. Specifically, the Switch forwarding plane receives the data packet B, and the attributes of the data packet B include the protocol type of TCP, the destination address of 200.168.10.1, the port number of 2 and the source address of 200.168.38.1.

Step 602: the Switch forwarding plane sends the attributes of the current data packet to the Switch control plane through the internal channel.

Step 603: the Switch control plane receives the attributes of the current data packet, and performs rule matching on the current data packet.

The attributes of the data packet include the protocol type of TCP, the destination address of 200.168.10.1, the port number of 2 and the source address of 200.168.38.1.

When it is recorded in the address translation matching rule that a data packet with the protocol type of TCP, the destination address of 200.168.10.1 and the host port number of 2 is in need of address translation, the current data packet B is in need of address translation. The set of flow tables executes a Group command, and directs to the improved table group with the table entry of NAT data type.

Step 604: the NAT analysis module analyses the source address and destination address of the current data packet according to the IANA regulation and the address translation rule, generates a translation command, and transmits the translation command to the Switch forwarding plane through the internal channel.

Specifically, the NAT analysis module analyses the source address and destination address of the current data packet B. Since the destination address (public IP address) of the current data packet B is 200.168.10.1 and the source address is 200.168.38.1, the NAT analysis module determines that the source address of the current data packet B is a public IP address and the destination address is also a public IP address according to the IANA regulation. The NAT analysis module determines that the destination address and the port numbers are within the public IP address range and port number range recorded in the address translation rule according to the address translation rule. The NAT analysis module looks up all the stored items in the NAT list.

When the NAT analysis module can find the NAT list item with a record of the address translation relationship of the destination address, i.e. the public IP address, of the current data packet, the NAT analysis module generates a translation command of translating the public IP address (destination address) into a private address, and sends the translation command to the Switch forwarding plane 32 through the internal channel 31.

When the NAT analysis module cannot find the NAT list item with a record of the address translation relationship of the public IP address (destination address), the NAT analysis module discards the current data packet.

Since the data packet B is a response data packet returned within the valid maintenance time, the NAT list item with a record of the address translation relationship between the public IP address of 200.168.10.1 and the private address of 192.168.0.1 exists, the NAT analysis module can find the NAT list item with a record of the address translation relationship of the public IP address 200.168.10.1, and thus the NAT analysis module generates the translation command, and transmits the translation command to the Switch forwarding plane.

Herein, since the data packet B is a response data packet returned within the valid maintenance time, the NAT list item with a record of the address translation relationship of the public IP address of 200.168.10.1 exists in the NAT analysis module. Thus, the NAT analysis module can find the NAT list item. When the data packet B is not returned within the valid maintenance time, it is indicated that there is no data packet subjected to corresponding address translation within the valid maintenance time in the NAT list item. Thus, the NAT analysis module deletes the NAT list item. For the data packet B returned after the valid maintenance time, the NAT analysis module cannot find the NAT list item with a record of the address translation relationship of the public IP address of 200.168.10.1, and thus the NAT analysis module discards the data packet B.

Step 605: the Switch forwarding plane finishes the translation of the current data packet from the public IP address to the private address after receiving the translation command transmitted by the NAT analysis module, and sends the current data packet to the host with the private address.

The public IP address (destination address) of 200.168.10.1 and the port number of 2 of the current data packet B are translated into the private address of 192.168.0.1 and the port number of 1 according to the found NAT list item.

Since there is an action in a DNAT Action List of the improved group table to output the current data packet to the physical port linked to the private network, the Switch forwarding plane translates the public IP address (destination address) of 200.168.10.1 into the private address of 192.168.0.1, and sends the data packet B to the host with the private address of 192.168.0.1 and port number of 1.

According to the NAT implementation system and method, and the Openflow switch provided by the embodiments of the disclosure, the Controller transmits the set of flow tables and the improved group table to the Openflow switch via the Openflow protocol. The Openflow switch performs rule matching on the received data packet. The set of flow tables executes the Group command and directs to the improved group table with the table entry of NAT data type when the data packet can be matched with the recorded address translation matching rule. The NAT analysis module analyzes the addresses of the current data packet according to the address translation rule recorded in the improved group table and the IANA regulation, generates the translation command, and transmits the translation command to the Switch forwarding plane. The Switch forwarding plane receives the translation command, and executes translation between the private address and public IP address of the current data packet. By the technical solutions of the embodiments of the disclosure, the Controller is not required to frequently transmit the set of flow tables, and is only required to transmit the set of flow tables and the improved group table when the data packet received by the Openflow switch is the first data packet from the private network. Therefore, the times of interaction between the Openflow switch and the Controller are reduced, the data packet forwarding time delay is shortened, and the network transmission efficiency is improved.

The above discussion is only the embodiments of the disclosure and not intended to limit the scope of protection of the disclosure.

## Claims

1. A Network Address Translation, NAT, implementation system, comprising: a Controller (2) and an Openflow switch (3), wherein
the Controller (2) is configured to transmit a set of pre-set flow tables and a pre-set improved group table to the Openflow switch via an Openflow protocol once; and
the Openflow switch (3) is configured to:
receive via the Openflow protocol the set of pre-set flow tables and the pre-set improved group table transmitted by the Controller (2); and
receive a data packet from a private network or the Internet, determine the data packet in need of address translation according to an address translation matching rule recorded in the set of pre-set flow tables, execute translation between a private address and public Internet Protocol, IP, address of the data packet according to an address translation rule recorded in the pre-set improved group table, and send the data packet after the address translation to the Internet or the private network.

2. The NAT implementation system according to claim 1, wherein the Openflow switch (3) comprises: a Switch control plane (30), an internal channel (31) and a Switch forwarding plane (32), wherein
the Switch control plane (30) is configured to:
receive via the Openflow protocol the set of pre-set flow tables and the pre-set improved group table transmitted by the Controller (2);
determine whether attributes of the received data packet matches with the address translation matching rule recorded in the set of pre-set flow tables after receiving the set of pre-set flow tables and the pre-set improved group table, in the case that the attributes of the data packet can be matched with the address translation matching rule recorded in the set of pre-set flow tables, the set of pre-set flow tables executing a Group command and directing to the pre-set improved group table, and
generate a translation command according to the address translation rule recorded in the pre-set improved group table, and transmit the translation command to the Switch forwarding plane (32) through the internal channel (31);
the Switch forwarding plane (32) is configured to:
receive the data packet from the private network or the Internet, send the attributes of the data packet to the Switch control plane (30) through the internal channel (31); and
receive the translation command from the Switch control plane (30), execute translation between the private address and the public IP address of the data packet according to the address translation rule, and send the data packet after the address translation to the private network or the Internet.

3. The NAT implementation system according to claim 1 or 2, wherein the address translation rule recorded in the pre-set improved group table comprises the following contents: a protocol type of the data packet in need of address translation, a public IP address range from which a public IP address may be selected to correspond to a private address, a port number range and valid maintenance time of a translation correspondence between a private address and a public IP address.

4. The NAT implementation system according to claim 1, wherein the set of pre-set flow tables records rules and commands which are executed on the data packet which can be matched with the rules; the rules comprise the address translation matching rule; the commands comprise the Group command; and in the case that a data packet can be matched with the address translation matching rule recorded in the set of pre-set flow tables, the set of pre-set flow tables executes the Group command, and directs to the pre-set improved group table containing a NAT data type.

5. The NAT implementation system according to claim 2, wherein the Switch control plane receives the set of pre-set flow tables and the pre-set improved group table, and the Switch control plane (30) further comprises a NAT analysis module (300), wherein
the set of pre-set flow tables is configured to execute the Group command and direct to the pre-set improved group table containing a NAT data type in the case that the attributes of the data packet can be matched with the recorded address translation matching rule;
the pre-set improved group table is configured to record the address translation rule; and
the NAT analysis module is configured to analyse the attributes of the data packet according to an Internet Assigned Numbers Authority, IANA, regulation and the address translation rule, generate the translation command, and transmit the translation command to the Switch forwarding plane (32) through the internal channel (31).

6. The NAT implementation system according to claim 5, wherein the Switch forwarding plane (32) is further configured to store an item of the data packet in a NAT list after finishing translation from the private address to the public IP address.

7. A Network Address Translation, NAT, implementation method, comprising:
Receiving (401), by an Openflow switch, a set of pre-set flow tables and a pre-set improved group table transmitted by a Controller via an Openflow protocol once; and
Determining (402), by the Openflow switch, a data packet in need of address translation according to the set of received pre-set flow tables and the received pre-set improved group table and an address translation matching rule recorded in the set of pre-set flow tables, executing translation between a private address and a public Internet Protocol, IP, address of the data packet according to an address translation rule recorded in the pre-set improved group table, and sending the data packet after the address translation to the Internet or a private network.

8. The NAT implementation method according to claim 7, wherein the address translation rule recorded in the pre-set improved group table comprises:
a protocol type of the data packet in need of address translation, a public IP address range from which a public IP address may be selected to correspond to a private address, a port number range and valid maintenance time of a translation correspondence between a private address and a public IP address.

9. The NAT implementation method according to claim 7, wherein translation between the private address and the public IP address of the data packet comprises:
determining whether a source address and a destination address of a current data packet are private addresses or public IP addresses according to an Internet Assigned Numbers Authority, IANA, regulation and the address translation rule;
In the case that the source address of the current data packet is determined to be a private address and the destination address is determined to be a public IP address, translating the private address into the public IP address, sending the current data packet to the destination address via the translated public IP address, and storing an item of the current data packet in a NAT list;
in the case that the source address of the current data packet is determined to be a public IP address and the destination address is within the range recorded in the address translation rule, looking up all the stored items in the NAT list;
in the case that a NAT list item about a translation relationship of the public IP address is found, translating the destination IP address and port number of the current data packet into a private address and port number, and sending the current data packet to a host linked to the private address; and
in the case that no NAT list item about the translation relationship of the public IP address is found, discarding the current data packet.

10. An Openflow switch, comprising: a Switch control plane (30), an internal channel (31) and a Switch forwarding plane (32), wherein
the Switch control plane (30) is configured to:
receive a set of pre-set flow tables and a pre-set improved group table transmitted by a Controller via an Openflow protocol once;
determine whether attributes of received data packet matches with an address translation matching rule recorded in the set of pre-set flow tables after receiving the set of pre-set flow tables and the pre-set improved group table, in the case that the attributes of the data packet can be matched with the address translation matching rule recorded in the set of pre-set flow tables, the set of pre-set flow tables executing a Group command and directing to the pre-set improved group table; and
generate a translation command according to an address translation rule recorded in the pre-set improved group table, and transmit the translation command to the Switch forwarding plane through the internal channel;
the Switch forwarding plane (32) is configured to:
receive a data packet from a private network or the Internet, and send the attributes of the received data packet to the Switch control plane (30) through the internal channel (31); and
receive the translation command from the Switch control plane (30), execute translation between a private address and a public Internet Protocol, IP, address of the data packet according to the address translation rule, and send the data packet after the address translation to the private network or the Internet.

11. The Openflow switch according to claim 10, wherein the Switch control plane (30) receives the set of pre-set flow tables and the pre-set improved group table, and the Switch control plane (30) further comprises a Network Address Translation, NAT, analysis module (300), wherein
the set of pre-set flow tables is configured to execute the Group command and direct to the pre-set improved group table containing a NAT data type in the case that the attributes of the data packet can be matched with the recorded address translation matching rule;
the pre-set improved group table is configured to record the address translation rule; and
the NAT analysis module (300) is configured to analyse the attributes of the data packet according to an Internet Assigned Numbers Authority, IANA, regulation and the address translation rule, generate the translation command, and transmit the translation command to the Switch forwarding plane (32) through the internal channel (31).

12. The Openflow switch according to claim 10 or 11, wherein the address translation rule recorded in the pre-set improved group table comprises the following contents: a protocol type of the data packet in need of address translation, a public IP address range from which a public IP address may be selected to correspond to a private address, a port number range and valid maintenance time of a translation correspondence between a private address and a public IP address.

## Patentansprüche

1. Netzwerk-Adressumsetzungs-, NAT-Durchführungssystem, umfassend: eine Steuerung (2) und einen Openflow-Switch (3), wobei
die Steuerung (2) konfiguriert ist, um einmal einen Satz von vorbestimmten Flow-Tabellen und eine vorbestimmte verbesserte Gruppentabelle über ein Openflow-Protokoll an den Openflow-Switch zu übertragen; und
der Openflow-Switch (3) konfiguriert ist, um:
über das Openflow-Protokoll den Satz von vorbestimmten Flow-Tabellen und die vorbestimmte verbesserte Gruppentabelle zu empfangen, die von der Steuerung (2) übertragen wurden; und
ein Datenpaket aus einem privaten Netzwerk oder dem Internet zu empfangen, das Datenpaket zu bestimmen, das eine Adressumsetzung entsprechend einer Übereinstimmungsregel für Adressumsetzung benötigt, die in dem Satz von vorbestimmten Flow-Tabellen gespeichert ist, die Umsetzung zwischen einer privaten Adresse und einer öffentlichen Internet-Protokoll-, IP-Adresse des Datenpakets entsprechend einer Adressumsetzungsregel auszuführen, die in der vorbestimmten verbesserten Gruppentabelle gespeichert ist, und das Datenpaket nach der Adressumsetzung in das Internet oder das private Netzwerk zu senden.

2. NAT-Durchführungssystem nach Anspruch 1, wobei der Openflow-Switch (3) umfasst: eine Switch-Steuerungsebene (30), einen internen Kanal (31) und eine Switch-Weiterleitungsebene (32), wobei
die Switch-Steuerungsebene (30) konfiguriert ist, um:
über das Openflow-Protokoll den Satz von vorbestimmten Flow-Tabellen und die vorbestimmte verbesserte Gruppentabelle zu empfangen, die von der Steuerung (2) übertragen wurden;
zu bestimmen, ob Attribute des empfangenen Datenpakets mit den Übereinstimmungsregeln für Adressumsetzung übereinstimmen, die in dem Satz von vorbestimmten Flow-Tabellen gespeichert sind, nach dem Empfangen des Satzes von vorbestimmten Flow-Tabellen und der vorbestimmten verbesserten Gruppentabelle, wobei für den Fall, dass die Attribute des Datenpakets mit der Übereinstimmungsregel für Adressumsetzung, die in dem Satz von vorbestimmten Flow-Tabellen gespeichert ist, in Übereinstimmung gebracht werden kann, der Satz von vorbestimmten Flow-Tabellen einen Gruppenbefehl ausführt und zu der vorbestimmten verbesserten Gruppentabelle leitet, und
einen Umsetzungsbefehl entsprechend der Übereinstimmungsregel für Adressumsetzung, die in dem Satz von vorbestimmten Flow-Tabellen gespeichert ist, zu erzeugen und den Umsetzungsbefehl durch den internen Kanal (31) an die Switch-Weiterleitungsebene (32) zu übertragen;
die Switch-Weiterleitungsebene (32) konfiguriert ist, um:
das Datenpaket aus dem privaten Netzwerk oder dem Internet zu empfangen, die Attribute des Datenpakets durch den internen Kanal (31) an die Switch-Steuerungsebene (30) zu senden; und
den Umsetzungsbefehl aus der Switch-Steuerungsebene (30) zu empfangen, Umsetzung zwischen der privaten Adresse und der öffentlichen IP-Adresse des Datenpakets entsprechend der Regel für Adressumsetzung auszuführen und das Datenpaket nach der Adressumsetzung an das private Netzwerk oder das Internet zu senden.

3. NAT-Durchführungssystem nach Anspruch 1 oder 2, wobei die Regel für Adressumsetzung, die in der vorbestimmten verbesserten Gruppentabelle gespeichert ist, die folgenden Inhalte umfasst: einen Protokolltyp des Datenpakets, welches eine Adressumsetzung benötigt, einen öffentlichen IP-Adressbereich, aus dem eine öffentliche IP-Adresse ausgewählt werden kann, um einer privaten Adresse zu entsprechen, einen Port-Nummernbereich und eine gültige Wartungszeit einer Umsetzungsentsprechung zwischen einer privaten Adresse und einer öffentlichen IP-Adresse.

4. NAT-Durchführungssystem nach Anspruch 1, wobei der Satz von vorbestimmten Flow-Tabellen Regeln und Befehle speichert, die am Datenpaket ausgeführt werden, die mit den Regeln in Übereinstimmung gebracht werden können; die Regeln die Übereinstimmungsregel für die Adressumsetzung umfassen; die Befehle den Gruppenbefehl umfassen; und für den Fall, dass ein Datenpaket mit der Übereinstimmungsregel für die Adressumsetzung, die in dem Satz von vorbestimmten Flow-Tabellen gespeichert ist, in Übereinstimmung gebracht werden kann, der Satz von vorbestimmten Flow-Tabellen den Gruppenbefehl ausführt und zu der vorbestimmten verbesserten Gruppentabelle leitet, welche einen NAT-Datentyp enthält.

5. NAT-Durchführungssystem nach Anspruch 2, wobei die Switch-Steuerungsebene den Satz von vorbestimmten Flow-Tabellen und die vorbestimmte verbesserte Gruppentabelle empfängt und die Switch-Steuerungsebene (30) weiter ein NAT-Analysemodul (300) umfasst, wobei
der Satz von vorbestimmten Flow-Tabellen konfiguriert ist, um den Gruppenbefehl auszuführen und zu der vorbestimmten verbesserten Gruppentabelle zu leiten, welche einen NAT-Datentyp enthält, für den Fall, dass die Attribute des Datenpakets mit der gespeicherten Übereinstimmungsregel für die Adressumsetzung in Übereinstimmung gebracht werden können;
die vorbestimmte verbesserte Gruppentabelle konfiguriert ist, um die Regel für Adressumsetzung zu speichern; und
das NAT-Analysemodul konfiguriert ist, um die Attribute des Datenpakets entsprechend einer Internet Assigned Numbers Authority-, IANA-Vorschrift und der Regel für Adressumsetzung zu analysieren, den Umsetzungsbefehl zu erzeugen und den Umsetzungsbefehl durch den internen Kanal (31) an die Switch-Weiterleitungsebene (32) zu übertragen.

6. NAT-Durchführungssystem nach Anspruch 5, wobei die Switch-Weiterleitungsebene (32) weiter konfiguriert ist, um ein Item des Datenpakets nach dem Beenden der Umsetzung von der privaten Adresse in die öffentliche IP-Adresse in einer NAT-Liste zu speichern.

7. Netzwerk-Adressumsetzungs-, NAT-Durchführungsverfahren, umfassend:
Empfangen (401) durch einen Openflow-Switch eines Satzes von vorbestimmten Flow-Tabellen und einer vorbestimmten verbesserten Gruppentabelle, die durch eine Steuerung über ein Openflow-Protokoll einmal übertragen worden sind; und
Bestimmen (402) durch den Openflow-Switch eines Datenpakets, das eine Adressumsetzung entsprechend dem Satz von empfangenen vorbestimmten Flow-Tabellen und der vorbestimmten verbesserten Gruppentabelle und einer Übereinstimmungsregel für die Adressumsetzung benötigt, die in dem Satz von vorbestimmten Flow-Tabellen gespeichert ist, Umsetzen zwischen einer privaten Adresse und einer öffentlichen Internet-Protokoll-, IP-Adresse des Datenpakets entsprechend einer Adressumsetzungsregel auszuführen, die in der vorbestimmten verbesserten Gruppentabelle gespeichert ist, und Senden des Datenpakets nach der Adressumsetzung in das Internet oder ein privates Netzwerk.

8. NAT-Durchführungsverfahren nach Anspruch 7, wobei die Adressumsetzungsregel, die in der vorbestimmten verbesserten Gruppentabelle gespeichert ist, umfasst:
einen Protokolltyp des Datenpakets, welches eine Adressumsetzung benötigt, einen öffentlichen IP-Adressbereich, aus dem eine öffentliche IP-Adresse ausgewählt werden kann, um einer privaten Adresse zu entsprechen, einen Port-Nummernbereich und eine gültige Wartungszeit einer Umsetzungsentsprechung zwischen einer privaten Adresse und einer öffentlichen IP-Adresse.

9. NAT-Durchführungsverfahren nach Anspruch 7, wobei die Umsetzung zwischen der privaten Adresse und der öffentlichen IP-Adresse des Datenpakets umfasst:
Bestimmen, ob eine Quelladresse und eine Destinationsadresse eines aktuellen Datenpakets private Adressen oder öffentliche IP-Adressen entsprechend einer Internet Assigned Numbers Authority, IANA-Vorschrift und der Adressumsetzungsregel sind;
für den Fall, dass die Quelladresse des aktuellen Datenpakets als eine private Adresse bestimmt wird und die Destinationsadresse als eine öffentliche IP-Adresse bestimmt wird, Umsetzen der privaten Adresse in die öffentliche IP-Adresse, Senden des aktuellen Datenpakets über die umgesetzte öffentliche IP-Adresse zu der Destinationsadresse, und Speichern eines Items des aktuellen Datenpakets in einer NAT-Liste;
für den Fall, dass die Quelladresse des aktuellen Datenpakets als eine öffentliche IP-Adresse bestimmt wird und die Destinationsadresse innerhalb des in der Adressumsetzungsregel gespeicherten Bereichs ist, Suchen nach allen gespeicherten Items in der NAT-Liste;
für den Fall, dass ein Item der NAT-Liste über ein Umsetzungsverhältnis der öffentlichen IP-Adresse gefunden wird, Umsetzen der Destinations-IP-Adresse und Port-Nummer des aktuellen Datenpakets in eine private Adresse und Port-Nummer und Senden des aktuellen Datenpakets an einen Host, der mit der privaten Adresse verknüpft ist; und
für den Fall, dass kein Item der NAT-Liste über ein Umsetzungsverhältnis der öffentlichen IP-Adresse gefunden wird, Verwerfen des aktuellen Datenpakets.

10. Openflow-Switch, umfassend: eine Switch-Steuerungsebene (30), einen internen Kanal (31) und eine Switch-Weiterleitungsebene (32), wobei
die Switch-Steuerungsebene (30) konfiguriert ist, um:
einen Satz von vorbestimmten Flow-Tabellen und eine vorbestimmte verbesserte Gruppentabelle, die durch eine Steuerung über ein Openflow-Protokoll einmal übertragen worden sind, zu empfangen;
zu bestimmen, ob Attribute des empfangenen Datenpakets mit den Übereinstimmungsregeln für die Adressumsetzung, die in dem Satz von vorbestimmten Flow-Tabellen gespeichert sind, übereinstimmen, nach dem Empfangen des Satzes von vorbestimmten Flow-Tabellen und der vorbestimmten verbesserten Gruppentabelle, wobei für den Fall, dass die Attribute des Datenpakets mit der Übereinstimmungsregel für die Adressumsetzung, die in dem Satz von vorbestimmten Flow-Tabellen gespeichert ist, in Übereinstimmung gebracht werden kann, der Satz von vorbestimmten Flow-Tabellen einen Gruppenbefehl ausführt und zu der vorbestimmten verbesserten Gruppentabelle leitet; und
einen Umsetzungsbefehl entsprechend der Übereinstimmungsregel für die Adressumsetzung, die in dem Satz von vorbestimmten Flow-Tabellen gespeichert ist, zu erzeugen und den Umsetzungsbefehl durch den internen Kanal an die Switch-Weiterleitungsebene zu übertragen;
die Switch-Weiterleitungsebene (32) konfiguriert ist, um:
ein Datenpaket aus einem privaten Netzwerk oder dem Internet zu empfangen und die Attribute des empfangenen Datenpakets durch den internen Kanal (31) an die Switch-Steuerungsebene (30) zu senden; und
den Umsetzungsbefehl von der Switch-Steuerungsebene (30) zu empfangen, Umsetzung zwischen einer privaten Adresse und einer öffentlichen Internet Protokoll-, IP-Adresse des Datenpakets entsprechend der Adressumsetzungsregel auszuführen und das Datenpaket nach der Adressumsetzung an das private Netzwerk oder das Internet zu senden.

11. Openflow-Switch nach Anspruch 10, wobei die Switch-Steuerungsebene (30) den Satz von vorbestimmten Flow-Tabellen und die vorbestimmte verbesserte Gruppentabelle empfängt und die Switch-Steuerungsebene (30) weiter ein Netzwerk-Adressumsetzungs-, NAT-Analysemodul (300) umfasst, wobei
der Satz von vorbestimmten Flow-Tabellen konfiguriert ist, um den Gruppenbefehl auszuführen und zu der vorbestimmten verbesserten Gruppentabelle zu leiten, welche einen NAT-Datentyp enthält, für den Fall, dass die Attribute des Datenpakets mit der gespeicherten Übereinstimmungsregel für die Adressumsetzung in Übereinstimmung gebracht werden können;
die vorbestimmte verbesserte Gruppentabelle konfiguriert ist, um die Adressumsetzungsregel zu speichern; und
das NAT-Analysemodul (300) konfiguriert ist, um die Attribute des Datenpakets entsprechend einer Internet Assigned Numbers Authority, IANA-Vorschrift und der Adressumsetzungsregel zu analysieren, den Umsetzungsbefehl zu erzeugen und den Umsetzungsbefehl durch den internen Kanal (31) an die Switch-Weiterleitungsebene (32) zu übertragen.

12. Openflow-Switch nach Anspruch 10 oder 11, wobei die Adressumsetzungsregel, die in der vorbestimmten verbesserten Gruppentabelle gespeichert ist, die folgenden Inhalte umfasst: einen Protokolltyp des Datenpakets, welches eine Adressumsetzung benötigt, einen öffentlichen IP-Adressbereich, aus dem eine öffentliche IP-Adresse ausgewählt werden kann, um einer privaten Adresse zu entsprechen, einen Port-Nummernbereich und eine gültige Wartungszeit einer Umsetzungsentsprechung zwischen einer privaten Adresse und einer öffentlichen IP-Adresse.

## Revendications

1. Système de mise en oeuvre d'une traduction d'adresse de réseau, NAT, comprenant : un dispositif de commande (2) et un commutateur Openflow (3), dans lequel
le dispositif de commande (2) est configuré pour transmettre une fois un ensemble de tables de flux prédéfinies et une table de groupe améliorée prédéfinie au commutateur Openflow par le biais d'un protocole Openflow ; et
le commutateur Openflow (3) est configuré pour :
recevoir par le biais du protocole Openflow l'ensemble de tables de flux prédéfinies et la table de groupe améliorée prédéfinie transmis par le dispositif de commande (2) ; et
recevoir un paquet de données à partir d'un réseau privé ou d'Internet, déterminer le paquet de données nécessitant une traduction d'adresse en fonction d'une règle de correspondance de traduction d'adresse enregistrée dans l'ensemble de tables de flux prédéfinies, exécuter une traduction entre une adresse privée et une adresse de protocole Internet, IP, publique du paquet de données en fonction d'une règle de traduction d'adresse enregistrée dans la table de groupe améliorée prédéfinie, et envoyer le paquet de données après la traduction d'adresse à Internet ou au réseau privé.

2. Système de mise en oeuvre de NAT selon la revendication 1, dans lequel le commutateur Openflow (3) comprend : un plan de commande de commutateur (30), un canal interne (31) et un plan de transfert de commutateur (32), dans lequel
le plan de commande de commutateur (30) est configuré pour :
recevoir par le biais du protocole Openflow l'ensemble de tables de flux prédéfinies et la table de groupe améliorée prédéfinie transmis par le dispositif de commande (2) ;
déterminer si des attributs du paquet de données reçu correspondent à la règle de correspondance de traduction d'adresse enregistrée dans l'ensemble de tables de flux prédéfinies après la réception de l'ensemble de tables de flux prédéfinies et de la table de groupe améliorée prédéfinie, dans le cas où les attributs du paquet de données peuvent être mis en correspondance avec la règle de correspondance de traduction d'adresse enregistrée dans l'ensemble de tables de flux prédéfinies, l'ensemble de tables de flux prédéfinies exécutant une commande de groupe et guidant vers la table de groupe améliorée prédéfinie, et
générer une commande de traduction en fonction de la règle de traduction d'adresse enregistrée dans la table de groupe améliorée prédéfinie, et transmettre la commande de traduction au plan de transfert de commutateur (32) par le biais du canal interne (31) ;
le plan de transfert de commutateur (32) est configuré pour :
recevoir le paquet de données à partir du réseau privé ou d'Internet, envoyer les attributs du paquet de données au plan de commande de commutateur (30) par le biais du canal interne (31) ; et
recevoir la commande de traduction à partir du plan de commande de commutateur (30), exécuter la traduction entre l'adresse privée et l'adresse IP publique du paquet de données en fonction de la règle de traduction d'adresse, et envoyer le paquet de données après la traduction d'adresse au réseau privé ou à Internet.

3. Système de mise en oeuvre de NAT selon la revendication 1 ou 2, dans lequel la règle de traduction d'adresse enregistrée dans la table de groupe améliorée prédéfinie comprend les contenus suivants : un type de protocole du paquet de données nécessitant une traduction d'adresse, une plage d'adresses IP publique à partir de laquelle une adresse IP publique peut être sélectionnée pour correspondre à une adresse privée, une plage de numéros de port et un temps de maintien valide d'une correspondance de traduction entre une adresse privée et une adresse IP publique.

4. Système de mise en oeuvre de NAT selon la revendication 1, dans lequel l'ensemble de tables de flux prédéfinies enregistre des règles et des commandes qui sont exécutées sur le paquet de données qui peut être mis en correspondance avec les règles ; les règles comprennent la règle de correspondance de traduction d'adresse ; les commandes comprennent la commande de groupe ; et, dans le cas où un paquet de données ne peut pas être mis en correspondance avec la règle de correspondance de traduction d'adresse enregistrée dans l'ensemble de tables de flux prédéfinies, l'ensemble de tables de flux prédéfinies exécute la commande de groupe et guide vers la table de groupe améliorée prédéfinie contenant un type de données NAT.

5. Système de mise en oeuvre de NAT selon la revendication 2, dans lequel le plan de commande de commutateur reçoit l'ensemble de tables de flux prédéfinies et de la table de groupe améliorée prédéfinie, et le plan de commande de commutateur (30) comprend en outre un module d'analyse de NAT (300), dans lequel
l'ensemble de tables de flux prédéfinies est configuré pour exécuter la commande de groupe et guider vers la table de groupe améliorée prédéfinie contenant un type de données NAT dans le cas où les attributs du paquet de données peuvent être mis en correspondance avec la règle de correspondance de traduction d'adresse enregistrée ;
la table de groupe améliorée prédéfinie est configurée pour enregistrer la règle de traduction d'adresse ; et
le module d'analyse de NAT est configuré pour analyser les attributs du paquet de donnes en fonction d'une règlementation d'Internet Assigned Numbers Authority, IANA, et de la règle de traduction d'adresse, générer la commande de traduction et transmettre la commande de traduction au plan de transfert de commutateur (32) par le biais du canal interne (31).

6. Système de mise en oeuvre de NAT selon la revendication 5, dans lequel le plan de transfert de commutateur (32) est configuré en outre pour stocker un élément du paquet de données dans une liste NAT après la terminaison de la traduction de l'adresse privée à l'adresse IP publique.

7. Méthode de mise en oeuvre d'une traduction d'adresse de réseau, NAT, comprenant :
la réception (401), par un commutateur Openflow, d'un ensemble de tables de flux prédéfinies et une table de groupe améliorée prédéfinie transmis par le dispositif de commande par le biais d'un protocole Openflow une fois ; et
la détermination (402), par le commutateur Openflow, d'un paquet de données nécessitant une traduction d'adresse en fonction de l'ensemble de tables de flux prédéfinies reçu et de la table de groupe améliorée prédéfinie reçue et d'une règle de traduction d'adresse enregistrée dans l'ensemble de tables de flux prédéfinies, l'exécution d'une correspondance de traduction entre une adresse privée et une adresse de protocole Internet, IP, publique du paquet de données en fonction d'une règle de traduction d'adresse enregistrée dans la table de groupe améliorée prédéfinie, et la transmission du paquet de données après la traduction d'adresse à Internet ou à un réseau privé.

8. Méthode de mise en oeuvre de NAT selon la revendication 7, dans laquelle la règle de traduction d'adresse enregistrée dans la table de groupe améliorée prédéfinie comprend :
un type de protocole du paquet de données nécessitant une traduction d'adresse, une plage d'adresses IP publiques à partir de laquelle une adresse IP publique peut être sélectionnée pour correspondre à une adresse privée, une plage de numéros de port et un temps de maintien valide d'une correspondance de traduction entre une adresse privée et une adresse IP publique.

9. Méthode de mise en oeuvre de NAT selon la revendication 7, dans laquelle une traduction entre l'adresse privée et l'adresse IP publique du paquet de données comprend :
le fait de déterminer si une adresse source et une adresse de destination d'un paquet de données actuel sont des adresses privées ou des adresses IP publiques en fonction de la règlementation d'Internet Assigned Numbers Authority, IANA, et de la règle de traduction d'adresse ;
dans le cas où l'adresse source du paquet de données actuel est déterminée comme étant une adresse privée et l'adresse de destination est déterminée comme étant une adresse IP publique, la traduction de l'adresse privée en l'adresse IP publique, la transmission du paquet de données actuel à l'adresse de destination via l'adresse IP publique traduite et le stockage d'un élément du paquet de données actuel dans une liste de NAT ;
dans le cas où l'adresse source du paquet de données actuel est déterminée comme étant une adresse IP publique et l'adresse de destination est dans une plage enregistrée dans la règle de traduction d'adresse, la recherche de tous les éléments stockés dans la liste de NAT ;
dans le cas où un élément de liste de NAT concernant une relation de traduction de l'adresse IP publique est trouvé, la traduction de l'adresse IP de destination et du numéro de port du paquet de données actuel en une adresse privée et un numéro de port, et la transmission du paquet de données actuel à un hôte lié à l'adresse privée ; et
dans le cas où aucun élément de liste de NAT concernant la relation de traduction de l'adresse IP publique n'est trouvé, le rejet du paquet de données actuel.

10. Commutateur Openflow comprenant : un plan de commande de commutateur (30), un canal interne (31) et un plan de transfert de commutateur (32), dans lequel
le plan de commande de commutateur (30) est configuré pour :
recevoir un ensemble de tables de flux prédéfinies et une table de groupe améliorée prédéfinie transmis une fois par un dispositif de commande par le biais d'un protocole Openflow ;
déterminer si des attributs du paquet de données reçu correspondent à une règle de correspondance de traduction d'adresse enregistrée dans l'ensemble de tables de flux prédéfinies, après la réception de l'ensemble de tables de flux prédéfinies et de la table de groupe améliorée prédéfinie, dans le cas où les attributs du paquet de données peuvent être mis en correspondance avec la règle de correspondance de traduction d'adresse enregistrée dans l'ensemble de tables de flux prédéfinies, l'ensemble de tables de flux prédéfinies exécutant une commande de groupe et guidant vers la table de groupe améliorée prédéfinie ; et
générer une commande de traduction en fonction d'une règle de traduction d'adresse enregistrée dans la table de groupe améliorée prédéfinie, et transmettre la commande de traduction au plan de transfert de commutateur par le biais du canal interne ;
le plan de transfert de commutateur (32) est configuré pour :
recevoir un paquet de données à partir d'un réseau privé ou d'Internet, et transmettre les attributs du paquet de données reçu au plan de commande de commutateur (30) par le biais du canal interne (31) ; et
recevoir la commande de traduction à partir du plan de commande de commutateur (30), exécuter une traduction entre une adresse privée et une adresse de protocole Internet, IP, publique du paquet de données en fonction de la règle de traduction d'adresse, et envoyer le paquet de données après la traduction d'adresse au réseau privé ou à Internet.

11. Commutateur Openflow selon la revendication 10, dans lequel le plan de commande de commutateur (30) reçoit l'ensemble de tables de flux prédéfinies et la table de groupe améliorée prédéfinie et le plan de commande de commutateur (30) comprend en outre un module d'analyse de traduction d'adresse de réseau, NAT, (300), dans lequel
l'ensemble de tables de flux prédéfinies est configuré pour exécuter la commande de groupe et guider vers la table de groupe améliorée prédéfinie contenant un type de données NAT dans le cas où les attributs du paquet de données peuvent être mis en correspondance avec la règle de correspondance de traduction d'adresse enregistrée ;
la table de groupe améliorée prédéfinie est configurée pour enregistrer la règle de traduction d'adresse ; et
le module d'analyse de NAT (300) est configuré pour analyser les attributs du paquet de donnes en fonction d'une règlementation d'Internet Assigned Numbers Authority, IANA, et de la règle de traduction d'adresse, générer la commande de traduction et transmettre la commande de traduction au plan de transfert de commutateur (32) par le biais du canal interne (31).

12. Commutateur Openflow selon la revendication 10 ou 11, dans lequel la règle de traduction d'adresse enregistrée dans la table de groupe améliorée prédéfinie comprend les contenus suivants : un type de protocole du paquet de données nécessitant une traduction d'adresse, une plage d'adresses IP publique à partir de laquelle une adresse IP publique peut être sélectionnée pour correspondre à une adresse privée, une plage de numéros de port et un temps de maintien valide d'une correspondance de traduction entre une adresse privée et une adresse IP publique.
